# EUROPÄISCHE PATENTSCHRIFT

(11) **EP 1 966 872 B1**
(45) Veröffentlichungstag und Bekanntmachung des Hinweises auf die Patenterteilung: **21.01.2015**
(21) Anmeldenummer: 06828545.1
(22) Anmeldetag: 20.11.2006
(51) Int. Cl.: H02K 15/095

(54) **VORRICHTUNG ZUM BEWICKELN EINES ROTORS MIT KOMMUTATOR UND DAZUGEHÖRENDES HERSTELLUNGSVERFAHREN**
APPPARATUS FOR WINDING A ROTOR HAVING A COMMUTATOR AND ASSOCIATED MANUFACTURING METHOD
DISPOSITIF POUR BOBINER UN ROTOR AVEC UN COMMUTATEUR ET PROCÉDÉ DE FABRICATION CORRESPONDANT

(30) Priorität: 23.12.2005 DE 102005062669
(43) Veröffentlichungstag der Anmeldung: 10.09.2008
(73) Patentinhaber: Aumann GmbH, 32339 Espelkamp (DE)
(72) Erfinder: HAGEDORN, Jürgen, 32312 Lübbecke (DE)
(74) Vertreter: Scheffler, Jörg
(86) Internationale Anmeldenummer: PCT/DE2006/002041
(87) Internationale Veröffentlichungsnummer: WO 2007/076742

(56) Entgegenhaltungen:
- EP-A2- 0 944 157
- JP-A- 2003 088 065
- JP-A- 2004 023 974
- US-A- 3 927 843
- US-A- 5 335 868

## Beschreibung

Die Erfindung betrifft eine Vorrichtung zum Bewickeln eines in einer insbesondere mit einer Spannzange ausgestatteten Aufnahme gehaltenen, zu bewickelnden Teils, insbesondere Rotors, mit einem Draht, mit einer in einem Düsenträger angeordneten Wickeldüse für den Draht, welcher an einer Ausformung eines Kommutators des zu bewickelnden Teils festlegbar ist, wobei die Vorrichtung eine Halterung für eine innere Hülse und eine äußere Hülse aufweist und die Hülsen relativ zueinander verschiebbar sind. Weiterhin betrifft die Erfindung ein Arbeitsverfahren zum Bewickeln eines in einer Aufnahme gehaltenen Teils mittels der Vorrichtung.

Eine solche Vorrichtung wird in der Praxis eingesetzt, um mittels einer Wickelmaschine insbesondere Rotoren zu bewickeln. Dabei ist es bei einem Wechsel des zu bewickelnden Teils erforderlich, den Draht vorübergehend mit einer Klammer oder an einem Umwickelstift zu fixieren.

Eine gattungsgemäße Vorrichtung ist beispielsweise durch die US 3 927 843 A bekannt. Ferner betrifft auch die US 5 413 289 A eine Wickelvorrichtung.

Als nachteilig erweist es sich dabei, dass diese an der Klammer oder an dem Umwickelstift festgelegten Drahtabschnitte für nachfolgende Wicklungen nicht mehr genutzt werden können, sondern als Drahtrest entsorgt werden müssen. Im Bereich automatisierter Wickelverfahren können diese Drahtreste jedoch zu Fehlfunktionen führen und müssen aufwendig entsorgt werden. Weiterhin verursacht der Drahtverlust zusätzliche Kosten.

Die US 5,335,868 A offenbart bereits eine Wickelvorrichtung sowie ein diesbezügliches Verfahren. Die Wickelvorrichtung hat zwei hülsenförmige Körper, deren axiale Verschiebung zu einer kraft- bzw. klemmschlüssigen Fixierung des Drahtes zwischen einer Ausformung und einer inneren Hülse führt. Ein Schneidwerkzeug ist verschiebbar in einem Schlitz angeordnet, um den Draht zu schneiden, der zwischen einem Abschnitt der äußeren Hülse und einem Abschnitt der inneren Hülse geklemmt wird. Hierdurch kommt es jedoch zu einem Drahtüberstand, sodass der Draht auf die erforderliche Länge gekürzt und der Drahtrest entsorgt werden muss.

Der Erfindung liegt daher die Aufgabe zugrunde, eine Möglichkeit zu schaffen, einerseits unerwünschte Drahtverluste beim Bewickeln von Rotoren zu vermeiden oder zumindest wesentlich zu reduzieren, andererseits das Arbeitsverfahren zum Bewickeln solcher Rotoren wesentlich zu verbessern.

Die erstgenannte Aufgabe wird erfindungsgemäß mit einer Vorrichtung gemäß den Merkmalen des Anspruchs 1 gelöst. Die Unteransprüche 2 bis 6 betreffen besonders zweckmäßige Weiterbildungen der Erfindung.

Erfindungsgemäß ist also in einer ersten Position der Hülsen die Winkelstellung des Drahtes relativ zu der Ausformung mittels der äußeren Hülse und in einer zweiten Position der Hülsen der Draht mittels der inneren Hülse in der Ausformung unbeweglich festgelegt. Hierdurch wird es erstmals möglich, in der ersten Position die gewünschte Winkelstellung des Drahtes derart einzustellen, dass dieser ausschließlich axial, also in Richtung seiner Längsachse beweglich ist. Ein seitliches Abgleiten des Drahtes ist hingegen ausgeschlossen, weil der Draht eingeschlossen ist, indem die äußere Hülse gemeinsam mit der Ausformung den Draht umfangsseitig einschließt, ohne diesen jedoch zu verklemmen. In dem nächsten Schritt kann der Draht daher soweit zurückgezogen werden, bis der Draht die Ausformung im Wesentlichen ohne Überstand berührt und dadurch zuverlässig kontaktierbar ist. Durch Verschieben der Hülse wird sodann in der zweiten Position der Draht kraftschlüssig festgelegt, insbesondere eingeklemmt, und ist somit durch die bei dem nachfolgenden Bewickeln auftretende Zugkraft belastbar, ohne dass die Kontaktierung des Drahtes beschädigt werden kann. Auf diese Weise werden in optimaler Weise unerwünschte Drahtreste vermieden, so dass sowohl Materialverluste vermindert oder ausgeschlossen werden als auch das Herstellungsverfahren wesentlich vereinfacht wird.

Dabei erweist es sich als besonders vorteilhaft, wenn der Draht in der ersten Position zwischen der äußeren Hülse und der Ausformung ausschließlich axial beweglich eingeschlossen ist und daher eine Fixierung zur radialen Festlegung bei zugleich geringen Toleranzen erreicht wird. Die äußere Hülse kann hierzu beispielsweise auch Ausnehmungen aufweisen, die auf die Querschnittsfläche des Drahtes abgestimmt sind.

Die Ausformung könnte beispielsweise durch eine Aussparung, beispielsweise einen Schlitz oder eine Nut gebildet sein. Besonders vorteilhaft ist hingegen eine Weiterbildung der vorliegenden Erfindung, bei der die Ausformung des Kommutators einen Haken aufweist, gegen dessen freien Endbereich die äußere Hülse in der ersten Position anlegbar ist und in dessen Hakengrund der Draht in der zweiten Position mittels der inneren Hülse kraftschlüssig festlegbar ist. Auf diese Weise wird der Draht in dem vorbestimmten Haken in der ersten Position dadurch gesichert, dass der freie Endbereich gegen die äußere Hülse anliegt und der Draht gleichsam gefangen ist. Eine geringfügige radiale Beweglichkeit des Drahtes schränkt dabei die Funktionsfähigkeit der Vorrichtung nicht ein. Vielmehr wird dadurch eine universelle Anwendbarkeit für ein breites Spektrum unterschiedlicher Drahtdurchmesser erreicht. In der zweiten Position wird durch eine Verschiebung der Hülsen relativ zueinander die innere Hülse bis auf den Nutengrund abgesenkt, wobei der Draht unbeweglich fixiert wird, während die äußere Hülse unverändert gegen den freien Endbereich des Hakens anliegt.

Eine weitere ebenfalls besonders vorteilhafte Ausführungsform wird dadurch erreicht, dass die Aufnahme mittels eines Antriebes in Richtung der Halterung verfahrbar ausgeführt ist, um so insbesondere die relative Bewegung der Hülsen durch die Bewegung der Halterung zu bewirken, indem die Halterung verfahren wird, bis diese gegen eine der Hülsen anliegt und die Hülsen dadurch relativ zueinander bewegt werden. Hierdurch wird der konstruktive Aufwand bei der Herstellung der Vorrichtung wesentlich vereinfacht. Insbesondere ist es dadurch möglich, auf einen der Halterung zugeordneten Antrieb zu verzichten, um so den Steuerungsaufwand zu verringern. Die Aufnahme wird dabei in Achsrichtung der späteren Rotationsachse des zu bewickelnden Teils nach oben verfahren.

Hierzu erweist es sich als besonders praxisnah, wenn die äußere Hülse mittels der gegen die äußere Hülse anliegenden Ausformungen relativ zu der inneren Hülse verschiebbar ist. Hierdurch kann in einfacher Weise sichergestellt werden, dass die den Draht festlegende kraftschlüssige Verbindung zwischen der äußeren Hülse und der Ausformung während der Relativbewegung der Hülse zuverlässig eingehalten wird und daher ein Abgleiten des Drahtes ausgeschlossen ist. Dabei kann beispielsweise zusätzlich während der Bewegung der Hülse aus der ersten Position in die zweite Position eine parallele Bewegung des Düsenträgers derart vorgesehen sein, dass der relative Abstand zwischen der Wickeldüse und der Ausformung des Kommutators auch während der Bewegung konstant ist.

Weiterhin erweist es sich als besonders zweckmäßig, wenn der Düsenträger radial zu dem Teil oder der Aufnahme verfahrbar ausgeführt ist. Hierdurch kann der Draht in der ersten Position der Halterung problemlos derart in Richtung der Drahtlängsachse verlagert werden, bis ein unerwünschter axialer Überstand auf ein Minimum reduziert ist. Hierdurch kann die Drahtverlagerung mit sehr hoher Genauigkeit erfolgen.

Eine andere ebenfalls besonders praxisgerechte Ausgestaltung der vorliegenden Erfindung wird dadurch erreicht, dass der Wickeldüse oder dem Düsenträger eine Drahtsperre zur Festlegung des Drahtes zugeordnet ist. Mittels der Drahtsperre wird sichergestellt, dass die Bewegung des Düsenträgers relativ zu dem zu bewickelnden Teil in eine entsprechende Verlagerung des Drahtes umgesetzt und dieser mit hoher Genauigkeit positioniert werden kann. Vor dem eigentlichen Wickelprozess wird die Drahtsperre gelöst.

Die Halterung könnte schwenkbeweglich angeordnet sein, um die gewünschte Winkelstellung des Drahtes in Bezug auf das zu bewickelnde Teil zu erreichen. Besonders einfach ist hingegen eine Ausführungsform der erfindungsgemäßen Vorrichtung, bei der die Aufnahme des zu bewickelnden Teils um die Rotationsachse des Teils schwenkbeweglich ausgeführt ist. Hierdurch wird die Winkelstellung mühelos einstellbar, ohne eine konstruktive Änderung gegenüber einer an sich bekannten Wickelvorrichtung vornehmen zu müssen.

Die zweitgenannte Aufgabe, ein für die Vorrichtung bestimmtes Arbeitsverfahren zum Bewickeln eines in einer Aufnahme gehaltenen Teils mit einem Draht mittels der Vorrichtung zu schaffen, wird erfindungsgemäß dadurch gelöst, dass das Teil mittels der Aufnahme in eine vorbestimmte Winkelstellung relativ zu der Wickeldüse verschwenkt wird, dann relativ zu der äußeren Hülse verfahren wird, bis der Draht zwischen der Ausformung und der äußeren Hülse in Richtung seiner Drahtlängsachse beweglich eingeschlossen ist und schließlich relativ zu der inneren Hülse verfahren wird, bis der Draht zwischen der Ausformung und der inneren Hülse kraftschlüssig fixiert ist. Hierdurch wird zunächst die gewünschte Winkelstellung des Drahtes eingestellt, indem das Teil um seine Rotationsachse verschwenkt wird. Alsdann wird das Teil relativ zu der äußeren Hülse verfahren, bis der Draht zwischen der Ausformung und der äußeren Hülse radial beweglich eingeschlossen ist, und der Draht daher lediglich axial, also in Richtung seiner Längsachse beweglich ist. Ein seitliches Abgleiten des Drahtes ist hingegen ausgeschlossen, weil der Draht umfangsseitig eingeschlossen ist, indem die äußere Hülse gemeinsam mit der Ausformung den Draht einschließt, ohne diesen jedoch zu verklemmen. In dem nächsten Schritt kann daher der Draht soweit zurückgezogen werden, bis der Draht die Ausformung ohne Überstand berührt und sich zuverlässig kontaktieren lässt. Indem das Teil relativ zu der inneren Hülse verfahren wird, bis der Draht zwischen der Ausformung und der inneren Hülse kraftschlüssig fixiert ist, wird der Draht auch bei einer Belastung durch die bei dem nachfolgenden Bewickeln auftretenden Zugkräfte zuverlässig gehalten, ohne dass die Verbindung zwischen der Ausformung und dem Draht beeinträchtigt wird. Auf diese Weise werden in optimaler Weise unerwünschte Drahtreste vermieden, so dass sowohl Materialverluste vermindert als auch das Herstellungsverfahren wesentlich vereinfacht werden.

Die Erfindung lässt verschiedene Ausführungsformen zu. Zur weiteren Verdeutlichung ihres Grundprinzips ist eine davon in der Zeichnung dargestellt und wird nachfolgend beschrieben.

Diese zeigt jeweils in einer Seitenansicht in
- Fig.1: eine Vorrichtung zum Bewickeln eines Rotors mit einer eine innere und eine äußere Hülse aufweisenden Halterung in einer Ruheposition;
- Fig.2: die in Figur 1 gezeigte Vorrichtung ein einer ersten die Winkelstellung des Drahtes relativ zu dem Rotor festlegenden Position;
- Fig.3: die in Figur 1 gezeigte Vorrichtung ein einer zweiten den Draht unbeweglich fixierenden Position.

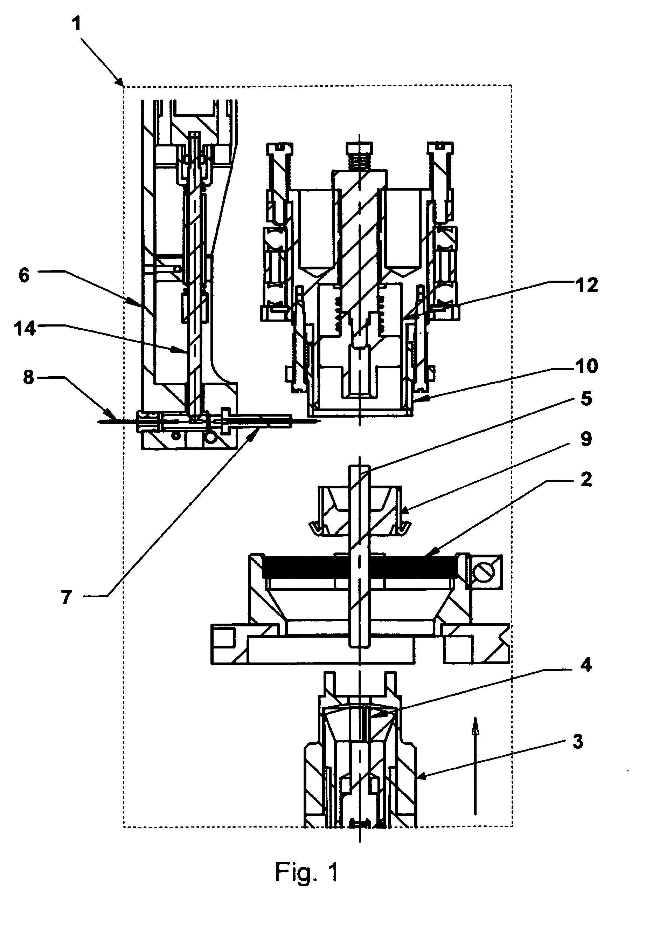

Die erfindungsgemäße Vorrichtung 1 sowie das diesbezügliche Arbeitsverfahren werden nachfolgend anhand der Figuren 1 bis 3 näher dargestellt. Darin zeigt Figur 1 eine Ruheposition der Vorrichtung 1, in welcher das als Rotor ausgeführte zu bewickelnde Teil 2 mittels einer drehbeweglichen Aufnahme 3 in eine die gewünschte Winkelstellung aufweisende Wickelposition gebracht wird. Mittels einer Spannzange 4 der Aufnahme 3 wird eine Rotorwelle 5 des Teils 2 an ihrem unteren Ende aufgenommen und auf diese Weise das Teil 2 aus der Aufnahme 3 herausgehoben. Die radiale Position des Teils 2 wird dabei gegenüber einem Düsenträger 6 so ausgerichtet, dass der aus einer Wickeldüse 7 herausstehende Draht 8 an einem Kommutator 9 des Teils 2 angelegt werden kann.

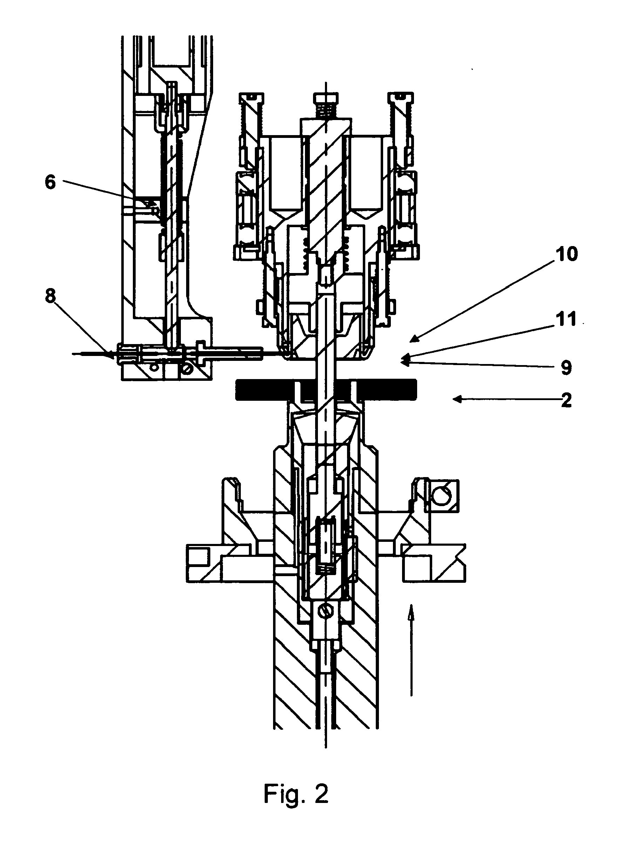

In weiteren, in Figur 2 näher dargestellten Verlauf des Arbeitsverfahrens wird das Teil 2 so weit angehoben, dass eine als Abdeckhülse ausgeführte äußere Hülse 10 gegen eine als Haken ausgestaltete Ausformung 11 des Kommutators 9 kraftschlüssig anliegt, ohne jedoch den Draht 8 zu klemmen. Durch eine radiale Bewegung des Düsenträgers 6 wird der Draht 8 in Richtung seiner Drahtlängsachse in die vorbestimmte Position gebracht, ohne dabei die radiale Position des Drahtes 8 gegenüber dem Kommutator 9 zu verlieren.

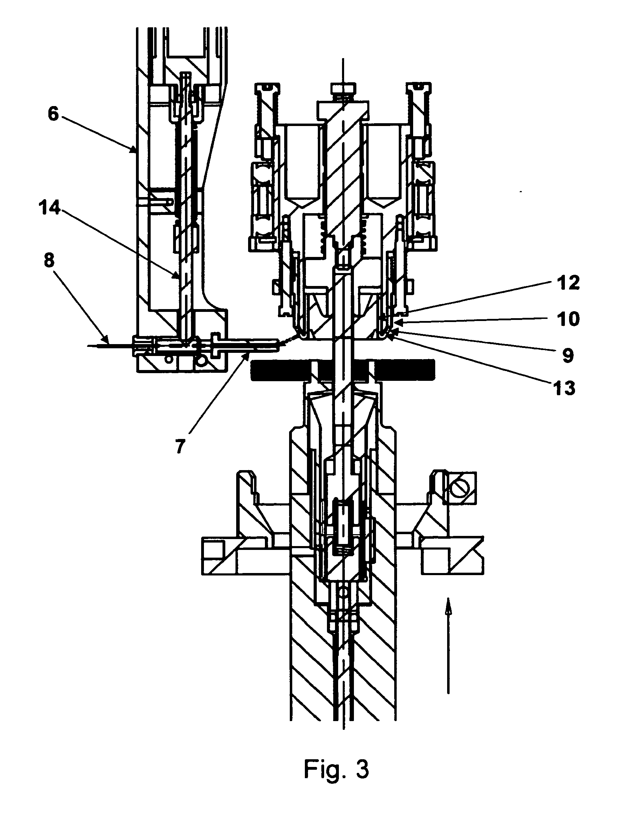

Nachdem die vorbestimmte Länge des Drahtes 8 an dem Kommutator 9 mittels des Düsenträgers 6 eingestellt ist, wird in dem in Figur 3 gezeigten, nachfolgenden Verfahrensschritt das zu bewickelnde Teil 2 weiter angehoben, bis eine gegenüber der äußeren Hülse 10 verschiebbare innere Hülse 12 den Draht 8 an einem Hakengrund 13 der Ausformung 11 des Kommutators 9 kraftschlüssig festlegt, insbesondere also verklemmt. In dieser Position ist der Draht 8 so kurz wie möglich an dem Kommutator 9 fixiert, so dass ein unerwünschter, zu Drahtresten führender Überstand vermieden wird. Eine dem Düsenträger 6 zugeordnete Drahtsperre 14 gibt den Draht 8 frei, so dass nun der eigentliche Wickelprozess beginnen kann. Ohne zwischenzeitliches Trennen des Drahtes 8 erfolgt das komplette Wickeln des Teils 2 und das Beschalten des Kommutators 9. Nachdem der Draht 8 an die letzte Lamelle des Kommutators 9 angelegt ist, schließt die Drahtsperre 14 des Düsenträgers 6. Eine nicht dargestellte Trenneinrichtung trennt den Draht 8 direkt an dem Kommutator 9. Das verbleibende, aus der Wickeldüse 7 herausragende Drahtende bildet so den Anfang des darauf folgenden Wickelzyklus.

## Patentansprüche

1. Vorrichtung (1) zum Bewickeln eines in einer Aufnahme (3) gehaltenen, zu bewickelnden Teils (2), insbesondere Rotors, mit einem Draht (8), mit einer in einem Düsenträger (6) angeordneten Wickeldüse (7) für den Draht (8), welcher an einer Ausformung (11) eines Kommutators (9) des zu bewickelnden Teils (2) festlegbar ist, wobei die Vorrichtung (1) eine Halterung für eine innere Hülse (12) und eine äußere Hülse (10) aufweist und die Hülsen (10, 12) relativ zueinander verschiebbar sind, wobei das in der Aufnahme (3) gehaltene, zu bewickelnde Teil (2) mittels der Aufnahme in eine vorbestimmte Winkelstellung relativ zu der Wickeldüse (7) verschwenkbar ist, bis der aus einer Wickeldüse (7) herausstehende Draht (8) an einem Kommutator (9) des Teils (2) anliegt und das zu bewickelnde Teil (2) relativ zu der äußeren Hülse (10) verfahrbar ist, bis der Draht (8) zwischen der Ausformung (11) und der äußeren Hülse (12) in Richtung seiner Drahtlängsachse beweglich eingeschlossen ist und in dieser ersten Position der Hülsen (10, 12) die Winkelstellung des Drahtes (8) relativ zu der Ausformung (11) mittels der äußeren Hülse (10) festlegbar ist, ohne den Draht (8) zu klemmen, sodass der Draht (8) in der ersten Position zwischen der äußeren Hülse (10) und der Ausformung (11) ausschließlich in Richtung seiner Drahtlängsachse axial beweglich eingeschlossen ist, um den Draht (8) so weit zurückzuziehen, bis der Draht (8) die Ausformung (11) im Wesentlichen ohne Überstand berührt und dadurch kontaktierbar ist, und in einer zweiten Position der Hülsen (10, 12) der Draht (8) zwischen der Ausformung (11) und der inneren Hülse (12) kraftschlüssig fixiert ist, wobei die äußere Hülse (10) mittels der gegen die äußere Hülse (10) anliegenden Ausformungen (11) relativ zu der inneren Hülse (12) verschiebbar ist.

2. Vorrichtung (1) nach Anspruch 1, **dadurch gekennzeichnet, dass** die Ausformung (11) des Kommutators (9) einen Haken aufweist, gegen dessen freien Endbereich die äußere Hülse (10) in der ersten Position anlegbar ist und in dessen Hakengrund (13) der Draht (8) in der zweiten Position mittels der inneren Hülse (12) kraftschlüssig festlegbar ist.

3. Vorrichtung (1) nach den Ansprüchen 1 oder 2, **dadurch gekennzeichnet, dass** die Aufnahme (3) mittels eines Antriebes in Richtung der Halterung verfahrbar ausgeführt ist.

4. Vorrichtung (1) nach zumindest einem der vorhergehenden Ansprüche, **dadurch gekennzeichnet, dass** der Düsenträger (6) radial zu dem Teil (2) und/oder der Aufnahme (3) verfahrbar ausgeführt ist.

5. Vorrichtung (1) nach zumindest einem der vorhergehenden Ansprüche, **dadurch gekennzeichnet, dass** der Wickeldüse (7) oder dem Düsenträger (6) eine Drahtsperre (14) zur Festlegung des Drahtes (8) zugeordnet ist.

6. Vorrichtung (1) nach zumindest einem der vorhergehenden Ansprüche, **dadurch gekennzeichnet, dass** die Aufnahme (3) des zu bewickelnden Teils (2) schwenkbeweglich ausgeführt ist.

7. Arbeitsverfahren zum Bewickeln eines in einer Aufnahme gehaltenen, einen Kommutator (9) aufweisenden Teils (2) mit einem Draht (8), wobei das in einer Aufnahme (3) gehaltene, zu bewickelnde Teil (2) mittels der Aufnahme (3) in eine vorbestimmte Winkelstellung relativ zu der Wickeldüse (7) verschwenkt wird, bis der aus einer Wickeldüse (7) herausstehende Draht (8) an einem Kommutator (9) des Teils (2) anliegt, dann das Teil (2) relativ zu der äußeren Hülse (10) verfahren wird, bis der Draht (8) zwischen der Ausformung (11) und der äußeren Hülse (10) in Richtung seiner Drahtlängsachse beweglich eingeschlossen ist und in dieser ersten Position der Hülsen (10, 12) die Winkelstellung des Drahtes (8) relativ zu der Ausformung (11) mittels der äußeren Hülse (10) festgelegt wird, ohne jedoch den Draht (8) zu klemmen; im nächsten Schritt wird der Draht (8) so weit zurückgezogen, bis der Draht (8) die Ausformung (11) des Kommutators (9) im Wesentlichen ohne Überstand berührt und schließlich das Teil (2) relativ zu der inneren Hülse (12) verfahren wird, bis der Draht (8) zwischen der Ausformung (11) und der inneren Hülse (12) kraffschlüssig fixiert ist, wobei die äußere Hülse (10) mittels der gegen die äußere Hülse (10) anliegenden Ausformungen (11) relativ zu der inneren Hülse (12) verschoben wird.

## Claims

1. Apparatus (1) for winding a part (2), in particular a rotor, to be wound, held in a receptacle (3), with a wire (8), having a winding nozzle (7), arranged in a nozzle carrier (6), for the wire (8) which can be secured to a shaped-out portion (11) of a commutator (9) of the part (2) to be wound, the apparatus (1) having a holding device for an inner sleeve (12) and for an outer sleeve (10), and the sleeves (10, 12) being displaceable in relation to one another, the part (2) to be wound, held in the receptacle (3), being pivotable by means of the receptacle into a predetermined angular position in relation to the winding nozzle (7), until the wire (8) projecting from a winding nozzle (7) bears against a commutator (9) of the part (2), and the part (2) to be wound being moveable in relation to the outer sleeve (10) until the wire (8) is enclosed, movably in the direction of its wire longitudinal axis, between the shaped-out portion (11) and the outer sleeve (12), and, in this first position of the sleeves (10, 12), the angular position of the wire (8) in relation to the shaped-out portion (11) being fixable by means of the outer sleeve (10), without the wire (8) being clamped, so that, in the first position, the wire (8) is enclosed between the outer sleeve (10) and the shaped-out portion (11) so as to be axially moveable solely in the direction of its wire longitudinal axis, in order to retract the wire (8) until the wire (8) touches the shaped-out portion (11) essentially without any projecting length and can thereby be contacted, and, in a second position of the sleeves (10, 12), the wire (8) being fixed non-positively between the shaped-out portion (11) and the inner sleeve (12), the outer sleeve (10) being displaceable in relation to the inner sleeve (12) by means of the shaped-out portions (11) which bear against the outer sleeve (10).

2. Apparatus (1) according to Claim 1, **characterized in that** the shaped-out portion (11) of the commutator (9) has a hook, against the free end region of which the outer sleeve (10) can be brought to bear in the first position and in the hook bottom (13) of which the wire (8) can be secured non-positively by means of the inner sleeve (12) in the second position.

3. Apparatus (1) according to either one of Claims 1 and 2, **characterized in that** the receptacle (3) is designed to be moveable in the direction of the holding device by means of a drive.

4. Apparatus (1) according to at least one of the preceding claims, **characterized in that** the nozzle carrier (6) is designed to be moveable radially with respect to the part (2) and/or to the receptacle (3).

5. Apparatus (1) according to at least one of the preceding claims, **characterized in that** the winding nozzle (7) or the nozzle carrier (6) is assigned a wire lock (14) for securing the wire (8).

6. Apparatus (1) according to at least one of the preceding claims, **characterized in that** the receptacle (3) of the part (2) to be wound is designed to be pivotably moveable.

7. Working method for winding a part (2), held in a receptacle and having a commutator (9), with a wire (8), the part (2) held in a receptacle (3) and to be wound being pivoted into a predetermined angular position in relation to the winding nozzle (7) by means of the receptacle (3), until the wire (8) projecting from a winding nozzle (7) bears against a commutator (9) of the part (2), the part (2) then being moved in relation to the outer sleeve (10) until the wire (8) is enclosed, moveably in the direction of its wire longitudinal axis, between the shaped-out portion (11) and the outer sleeve (10), and, in this first position of the sleeves (10, 12), the angular position of the wire (8) in relation to the shaped-out portion (11) being fixed by means of the outer sleeve (10), but without the wire (8) being clamped; in the next step, the wire (8) is retracted until the wire (8) touches the shaped-out portion (11) of the commutator (9) essentially without any projecting length, and finally the part (2) is moved in relation to the inner sleeve (12) until the wire (8) is fixed non-positively between the shaped-out portion (11) and the inner sleeve (12), the outer sleeve (10) being displaced in relation to the inner sleeve (12) by means of the shaped-out portions (11) which bear against the outer sleeve (10).

## Revendications

1. Dispositif (1) pour bobiner une pièce à bobiner (2) maintenue dans un logement (3), notamment un rotor, avec un fil (8), avec une buse de bobinage (7) disposée dans un support de buse (6) pour le fil (8), ledit dispositif pouvant être fixé à une enceinte (11) d'un commutateur (9) de la pièce à bobiner (2), le dispositif (1) comportant un support pour un fourreau intérieur (12) et un fourreau extérieur (10) et les fourreaux (10, 12) pouvant être coulissés l'un par rapport à l'autre, la pièce à bobiner (2) maintenue dans le logement (3) pouvant être pivotée à l'aide du logement dans une position angulaire prédéfinie par rapport à la buse de bobinage (7), jusqu'à ce que le fil (8) sortant d'une buse de bobinage (7) repose contre un commutateur (9) de la pièce (2) et que la pièce à bobiner (2) puisse être coulissée par rapport au fourreau extérieur (10), jusqu'à ce que le fil (8) soit intégré de façon mobile entre l'enceinte (11) et le fourreau extérieur (12) en direction de son axe longitudinal de fil et la position angulaire du fil (8) pouvant être fixée, dans cette première position des fourreaux (10, 12), par rapport à l'enceinte (11) à l'aide du fourreau extérieur (10), sans pincer le fil (8), de sorte que dans la première position, le fil (8) soit intégré de façon mobile dans le plan axial entre le fourreau extérieur (10) et l'enceinte (11), uniquement en direction de son axe longitudinal de fil, pour tirer le fil (8) jusqu'à ce que le fil (8) affleure l'enceinte (11) pour l'essentiel sans saillie et pouvant ainsi être contacté et que dans une deuxième position des fourreaux (10, 12), le fil (8) soit fixé par complémentarité de forces entre l'enceinte (11) et le fourreau intérieur (12), le fourreau extérieur (10) pouvant être coulissé par rapport au fourreau intérieur (12) à l'aide des enceintes (11) reposant contre le fourreau extérieur (10).

2. Dispositif (1) selon la revendication 1, **caractérisé en ce que** l'enceinte (11) du commutateur (9) comporte un crochet contre la zone d'extrémité libre duquel le fourreau extérieur (10) peut être posé dans la première position et dans le fond de crochet (13) duquel le fil (8) peut être fixé par complémentarité de forces dans la deuxième position à l'aide du fourreau intérieur (12).

3. Dispositif (1) selon les revendications 1 ou 2, **caractérisé en ce que** le logement (3) est réalisé de façon à pouvoir coulisser en direction du support à l'aide d'un entraînement.

4. Dispositif (1) selon au moins l'une quelconque des revendications précédentes, **caractérisé en ce que** le support de buse (6) est réalisé de façon à pouvoir coulisser dans le plan radial par rapport à la pièce (2) et/ou au logement (3).

5. Dispositif (1) selon au moins l'une quelconque des revendications précédentes, **caractérisé en ce qu'**un bloque-fil (14) est associé à la buse de bobinage (7) ou au support de buse (6) pour fixer le fil (8).

6. Dispositif (1) selon au moins l'une quelconque des revendications précédentes, **caractérisé en ce que** le logement (3) de la pièce à bobiner (2) est réalisé de façon mobile en pivotement.

7. Procédé de travail pour bobiner une pièce (2) maintenue dans un logement, comportant un commutateur (9), avec un fil (8), la pièce à bobiner (2) maintenue dans un logement (3) étant pivotée dans une position angulaire prédéfinie par rapport à la buse de bobinage (7) à l'aide du logement (3), jusqu'à ce que le fil (8) sortant d'une buse de bobinage (7) repose contre un commutateur (9) de la pièce (2), puis la pièce (2) étant coulissée par rapport au fourreau extérieur (10) jusqu'à ce que le fil (8) soit intégré de façon mobile entre l'enceinte (11) et le fourreau extérieur (10) en direction de son axe longitudinal de fil et que dans cette première position des fourreaux (10, 12), la position angulaire du fil (8) par rapport à l'enceinte (11) soit fixée à l'aide du fourreau extérieur (10) sans toutefois bloquer le fil (8) ; à l'étape suivante, le fil (8) est ramené jusqu'à ce que le fil (8) affleure l'enceinte (11) du commutateur (9) pour l'essentiel sans saillie et pour finir, la pièce (2) est coulissée par rapport au fourreau intérieur (12) jusqu'à ce que le fil (8) soit fixé par complémentarité de forces entre l'enceinte (11) et le fourreau intérieur (12), le fourreau extérieur (10) étant déplacé par rapport au fourreau intérieur (12) à l'aide des enceintes (11) reposant contre le fourreau extérieur (10).
